# EUROPÄISCHE PATENTSCHRIFT

(11) **EP 1 647 957 B1**
(45) Veröffentlichungstag und Bekanntmachung des Hinweises auf die Patenterteilung: **28.03.2012**
(21) Anmeldenummer: 04024773.6
(22) Anmeldetag: 18.10.2004
(51) Int. Cl.: H04M 11/00

(54) **Vorrichtung zum Weiterleiten von Wärme-und/oder Wasserverbrauchsdaten**
Device for forwarding of heat and/or water consumption
Appareil pour transmettre des données de consommation de chauffage et/ou d'eau

(43) Veröffentlichungstag der Anmeldung: 19.04.2006
(60) Teilanmeldung: 05008177.7
(73) Patentinhaber: METRONA WÄRMEMESSER UNION GMBH, 81379 München (DE)
(72) Erfinder: Heckmann, Dieter, 81475 München (DE); Hemauer, Wolfgang, 81377 München (DE)
(74) Vertreter: Becker Kurig Straus

(56) Entgegenhaltungen:
- DE-A1- 4 235 187
- DE-A1- 10 133 366
- DE-A1- 19 751 214
- DE-A1- 19 924 346
- DE-A1- 19 960 219
- FR-A1- 2 746 533

## Beschreibung

Die vorliegende Erfindung betrifft eine Vorrichtung zum Weiterleiten von Verbrauchsdaten, die den Wärme- oder Wasserverbrauch betreffen.

Bei verbrauchsabhängigen Abrechnungen von beispielsweise Wärme- oder Wasserkosten in Wohnungen oder gewerblich genutzten Räumen ist es im Allgemeinen üblich, die Verbrauchswerte einmal jährlich abzulesen. Die abgelesenen Werte werden von Hand notiert, in einem mobilen Rechner gespeichert oder per Modem ausgelesen und an ein Dienstleistungsunternehmen weitergeleitet, das sich auf die Erstellung von Verbrauchskostenrechnungen spezialisiert hat. Zusätzlich erhält das Dienstleistungsunternehmen Angaben über das Gesamtgebäude sowie Informationen, die die einzelnen Nutzer des Gebäudes betreffen.

Die DE 201 18 685 U1 offenbart eine Anordnung zur Übertragung und/oder Erfassung von Verbrauchsdaten. Die Anordnung umfasst ein Sendemodul, welches die zuvor gemessenen Verbrauchsdaten über ein Datenfernübertragungsnetz an eine Empfangsanlage übermittelt.

Die DE 100 39 430 A1 schlägt einen Verbrauchszähler vor, der mit einem Bluetooth-Modul versehen ist, um eine drahtlose Fernabfrage des Zählers zu ermöglichen. Ferner wird ein Bluetooth-Pico-Netzwerk offenbart, das aus entsprechenden Modulen aufgebaut ist, und über ein Knoten die Verbrauchsdaten an ein mit dem Netzwerk verbundenes Datengerät übermittelt.

Auch sind verschiedene Konzepte von drahtlosen Verbrauchsdatenerfassungseinrichtungen bekannt. Diese Einrichtungen arbeiten in der Regel auf den freigegebenen und somit lizenzfreien ISM-Frequenzbänder (433-434 MHz, 868-870 MHz und 2.45 GHz). Verbreitet ist ein System mit einer Vielzahl von Datensammlern, wobei deren Empfänger im Gebäude bzw. in der Liegenschaft installiert sind. Die Datensammler empfangen Daten, die von den jeweiligen Verbrauchsdatenerfassungsgeräten, z.B. auf ISM-Band stammen, und speichern diese, um eine gewünschte Weiterverarbeitung zu erreichen. Abhängig von der Sendeleistung der Verbrauchsdatenerfassungsgeräte ergibt sich die Anzahl der fest installierten Datensammler.

Da ein Gerät fehlerbedingt ausfallen kann, sollte eine vertretbare Redundanz bei der Anzahl der Datensammler mit eingeplant werden. Die in den Datensammlern gespeicherten Daten werden an das Dienstleistungsunternehmen üblicherweise durch Auslesen der Datensammler vor Ort, durch Transport über lokale Netzwerke (M-Bus), M-Bus Zentralrechner und Gateways in drahtgebundene öffentliche Netzwerke weitergeleitet. Nachteil dieser Datensammler ist, dass sie zum Betrieb Energie aus dem Stromnetz der Liegenschaft benötigen, was unwirtschaftlich und unsicher im Falle von Stromausfall ist. Bei Stromausfall entstehen unverhältnismäßig hohe Kosten.

So beschreibt die WO95/30217A1 ein System aus mehreren, mit Messgeräten verbundenen Messgeräteschnittstellen, die von einem zentralen Auslesegerät ausgelesen werden können. Zur Senkung ihres Stromverbrauchs können die Schnittstelleneinheiten in einen inaktiven Modus versetzt werden und dann durch eine Aufwecknachricht des Auslesegeräts zum Übertragen der Daten aktiviert werden. Weiter beschreibt DE 10133366A ein System zur Erfassung von Zählerstandsdaten, bei dem Daten von Zählern zu einer mobilen Datenübernahmevorrichtung und von dort über ein Mobilfunknetz zur zentralen Datensammelstelle gesendet werden. In der DE 4235187 werden Verbrauchsdaten von Zählereinheiten zu einer lokal installierten Empfangseinrichtung gesendet. Eine Zeitgebereinrichtung aktiviert die Vorrichtungen in regelmäßigen Intervallen zur Übertragung oder zum Empfang. Gemäß der DE 19960219 werden Verbrauchsdaten in regelmäßigen Abständen oder auf Anforderung per SMS von Zählern an eine zentrale Stelle weitergeleitet.

Aufgabe der vorliegenden Erfindung ist ein es, eine Vorrichtung bereitzustellen, welche den langfristigen Betrieb eines eingangs genannten Datensammlers sicherstellt. Ferner ist es die Aufgabe der erfindungsgemäßen Vorrichtung, ein Verbrauchsdatenerfassungsgerät bereitzustellen, welches direkt an einer Wärmequelle montiert wird und selbständig die Wärme-Verbrauchsdaten an ein Dienstleistungsunternehmen weitergibt. Diese Aufgaben werden mit Hilfe einer Vorrichtung gemäß dem Anspruch 1 gelöst. Weitere Ausführungsformen der vorliegenden Erfindung sind in den abhängigen Unteransprüchen wiedergegeben.

Gemäß einem Aspekt der vorliegenden Erfindung wird eine Vorrichtung zum Weiterleiten von Wärme- und/oder Wasserverbrauchsdaten bereitgestellt. Die erfindungsgemäße Vorrichtung umfasst eine Verarbeitungseinrichtung zur Verwaltung der Wärme- bzw. Wasserverbrauchsdaten und zur Steuerung der Vorrichtung. Der bereitgestellte Speicher speichert die Wärmeverbrauchsdaten bzw. Wasserverbrauchsdaten. Zur Identifizierung stellt die Verarbeitungseinrichtung ein Identifizierungsmodul bereit, welches einen Identifikationscode enthält. Der Identifikationscode wird für jede entsprechende Vorrichtung eindeutig bereitgestellt. Weiter wird ein Sender bzw. Sendeempfänger bereitgestellt, der die Wärme-Verbrauchsdaten aus dem Speicher ausliest und weiterleitet. Für die Steuerung von zeitabhängigen Operationen des Senders wird die Verarbeitungseinrichtung mit einem Zeitsteuerungsmodul gekoppelt.

Ferner ist es denkbar, einen zweiten Speicher bereitzustellen, der den ersten Speicher komplett spiegelt, um so eine sichere Verwahrung der Wärme-Verbrauchsdaten sicherzustellen.

Gemäß einer Ausführungsform der Erfindung umfasst die Vorrichtung ferner einen Empfänger, der Wärme-Verbrauchsdaten von einer Vielzahl von Heizkostenverteilern durch Funkkontakt empfängt, wobei der Empfänger mit dem Speicher und der Verarbeitungseinrichtung gekoppelt ist, wobei das Zeitsteuerungsmodul auch den Empfänger steuert. Der Empfänger erlaubt das Empfangen von Daten mehrerer Heizkostenverteiler, so dass die Kostenüberwachung in einer Liegenschaft mit verteilten Heizkostenverteilern unter mehreren Parteien ausgeführt werden kann. Die zeitliche Steuerung des Empfängers mit Hilfe des Zeitsteuerungsmoduls erlaubt einen Strom sparenden Betrieb des Empfängers. Der Empfänger leitet die empfangenen Daten an den Speicher weiter.

Es wird bevorzugt, dass der Empfänger von der Verarbeitungseinrichtung jeweils in einem vorbestimmten Empfangszeitfenster gemäß einem Empfangsprotokoll zum Empfang des Wärme-Verbrauchswertes eingeschaltet werden kann. Dies erlaubt ein kontrolliertes Empfangen der Wärme-Verbrauchsdaten, so dass der Empfänger nicht kontinuierlich in Betrieb sein muss. Demzufolge wird ein energiesparender Betrieb erreicht.

Gemäß einer weiteren Ausführungsform der Erfindung umfasst die Vorrichtung ferner ein Erfassungsmodul zum Erfassen der Wärme-Verbrauchsdaten. Das Erfassungsmodul ist mit dem Speicher und mit der Verarbeitungseinrichtung verbunden und außerdem in der Nähe einer Wärmequelle angeordnet. Durch diese vorteilhafte Ausführungsform, können die Wärme-Verbrauchsdaten direkt von der Wärmequelle erfasst werden.

Es ist bevorzugt, dass das Erfassungsmodul einen Temperatursensor aufweist. Der Temperatursensor liefert ein Maß für den Wärmeverbrauch der am Sensor befindlichen Wärmequelle. Dies erlaubt die direkte Erfassung der verbrauchten Energie und somit ferner eine vorteilhafte Ermittlung der entstandenen Kosten.

Gemäß einer weiteren Ausführungsform der Erfindung ist die Verarbeitungseinrichtung dementsprechend ausgelegt, so dass die Wärme-Verbrauchsdaten mit einem Datenkopf versehen werden. Der Datenkopf enthält den Identifizierungscode, die Uhrzeit und fakultativ weitere Information, die die Wärme-Verbrauchsdaten betreffen. Der Datenkopf dient zur genauen Identifizierung der Wärme-Verbrauchsdaten in einem Dienstleistungsunternehmen. Infolgedessen kann genau ermittelt werden, von wo die Daten stammen und ebenfalls können Uhrzeit und weitere Informationen abgelesen werden. Diese können beispielsweise statistischer Art sein.

Gemäß einer weiteren Ausführungsform der Erfindung kann der Sender von der Verarbeitungseinrichtung jeweils in einem vorbestimmten Sendezeitfenster gemäß einem Sendeprotokoll zum Senden des Wärme-Verbrauchswertes eingeschaltet werden. Dies ist vorteilhaft da der Sender nicht dauerhaft in Betrieb sein muss. Durch die Wahl des Sendezeitfensters in den Nachtstunden kann die Übertragung der Daten schneller verlaufen, da der Datenverkehr nachts entsprechend gering ist. Ferner kann das Sendeprotokoll zyklische Zeitpunkte zum Senden definieren, so dass eine monatliche Übertragung der Wärme-Verbrauchsdaten erreicht werden kann.

Gemäß einer weiteren Ausführungsform der Erfindung können das Empfangsprotokoll und das Sendeprotokoll so angepasst werden, dass das Sendezeitfenster und das Empfangszeitfenster im Wesentlichen übereinstimmen und diese zeitliche Synchronisierung den Datentransfer ermöglicht.

Gemäß einer weiteren Ausführungsform der Erfindung kann das Erfassungsmodul von der Verarbeitungseinrichtung jeweils in einem vorbestimmten Erfassungszeitfenster gemäß einem Erfassungsprotokoll zum Erfassen des Wärme-Verbrauchswertes eingeschaltet werden. Dies erlaubt ebenfalls einen energiesparenden Betrieb der Vorrichtung, da das Erfassungsmodul nicht kontinuierlich betrieben werden muss.

Es wird bevorzugt, dass das Sendeprotokoll und das Erfassungsprotokoll so angepasst sind, dass das Sendezeitfenster und das Erfassungszeitfenster im Wesentlichen zeitlich hinsichtlich der Zeitdauer übereinstimmen. Dies erlaubt eine direkte Übertragung der erfassten Wärmeverbrauchsdaten gegebenenfalls ohne Speichernutzung. Diese Ausführungsform ist beispielsweise vorteilhaft, falls der Speicher der Vorrichtung übergelaufen ist und die Daten trotzdem nicht verloren gehen sollen.

Gemäß einer weiteren Ausführungsform der Erfindung umfasst der Sender ein GSM-Modul, welches die Wärme-Verbrauchsdaten über ein GSM-Mobilfunknetzwerk weiterleitet. Dies ist vorteilhaft, da eine existierende Infrastruktur für die Übertragung der Wärme-Verbrauchsdaten verwendet werden kann.

Es wird bevorzugt, dass das GSM-Modul den Sender enthält, wobei die Verarbeitungseinrichtung bzw. das Zeitsteuermodul das GSM-Modul mittels eines Einwahlprotokolls steuert.

Somit kann beispielsweise eine uhrzeitabhängige Einwahl durchgeführt werden, die die Schwachlastzeiten des GSM-Mobilfunknetzwerkes ausnutzt.

Gemäß einer weiteren Ausführungsform der Erfindung umfasst die Verarbeitungseinrichtung ein Komprimierungsmodul, das ausgelegt ist, um in dem Speicher gespeicherte Wärme-Verbrauchsdaten verlustfrei zu komprimieren und in komprimierter Form an den Sender weiterzuleiten. Somit wird die Sendebandbreite durch die Reduzierung der zu übertragenden Daten nicht so stark belastet. Infolgedessen besteht die Möglichkeit, dass mehrere Sender einen Sendekanal benutzen.

Es wird bevorzugt, dass das Komprimierungsmodul betriebssystemunabhängige und dateisystemunabhängige Daten erzeugt. Diese vorteilhafte Ausführungsform ermöglicht eine von der Plattform unabhängige Handhabung der Daten und somit uneingeschränkte Kompatibilität.

Gemäß einer weiteren Ausführungsform der Erfindung umfasst der Sender ein UMTS-Modul, das die Wärme-Verbrauchsdaten über ein UMTS-Mobilfunknetzwerk weiterleitet. Durch die größere Kapazität des UMTS-Netzes können noch größere Datenmengen versendet werden und ebenfalls erweiterte Dienste bereitgestellt werden.

Gemäß einer weiteren Ausführungsform der Erfindung umfasst der Sender ein TETRA-Modul, das die Wärme-Verbrauchsdaten über ein TETRA-Mobilfunknetzwerk weiterleitet. Durch die Vorteile des TETRA-Netzes können noch größere Datenmengen versendet werden und ebenfalls erweiterte Dienste bereitgestellt werden.

Gemäß einer weiteren Ausführungsform der Erfindung umfasst der Sender ein Internet-Modul, das mit einem Web-Anschluss verbindbar ist, um die Wärme-Verbrauchsdaten direkt über das Internet weiterzuleiten. Durch das Internet-Modul und dessen Anbindung an das Web kann eine benutzerfreundliche und erweiterbare Schnittstelle realisiert werden. Durch den Einsatz von HTML oder XHTML kann somit die Verwaltung der Wärme-Verbrauchsdaten überall auf der Welt durchgeführt werden und als weiterer Vorteil ist es möglich, die bereits vorhandene Internet-Infrastruktur zu verwenden.

Es wird bevorzugt, dass das Identifizierungsmodul ein SIM-Modul umfasst. Das SIM-Modul (Subscriber Identity Module) erlaubt die genaue Identifizierung der Vorrichtung mittels einer darin integrierten Chipkarte. Ein weiterer Vorteil ist, dass die Chipkarte portabel ist und von einer Vorrichtung in die andere übertragen werden kann.

Es wird bevorzugt, dass die Verarbeitungseinrichtung so ausgelegt ist, dass sie einen Transfer der Wärme-Verbrauchsdaten mittels TCP/IP durchführt. Durch die Verwendung von TCP/IP wird ein weit verbreitetes Protokoll verwendet, um so eine standardisierte Erweiterung der Dienste zu ermöglichen. Es wird ebenfalls eine fehlerfreie Datenübertragung durch die Benutzung der Fehlerkorrektur des TCP/IP-Stacks ermöglicht.

Es wird bevorzugt, dass der Transfer der Wärme-Verbrauchsdaten mittels eines GPRS-Dienstes durchgeführt wird, der über das GSM Netzt erreicht werden kann. Dadurch wird eine paketbasierte Übertragung der Wärme-Verbrauchsdaten bereitgestellt, welche auf der bekannten und umfassend eingeführten GSM-Technologie basiert.

Gemäß einer weiteren Ausführungsform der Erfindung ist die Verarbeitungseinrichtung so ausgelegt, dass sie die gespeicherten Wärme-Verbrauchsdaten mit dem Identifizierungscode ergänzt und anschließend in Form von elektronischen Emails über den Sender weiterleitet. Durch die Verwendung der so genannten Email-Funktion kann eine verbesserte Verwaltung der Daten erreicht werden, da vorhandene und leicht erweiterbare Infrastrukturen verwendet werden können.

Es wird bevorzugt dass eine mit der Verarbeitungseinrichtung verbundene Schnittstelle vorgesehen ist, welche angepasst sind, die gespeicherten Wärme-Verbrauchsdaten lokal an eine Ableseeinrichtung weiterzugeben. Dies kann beispielsweise über einen optischen Kanal erfolgen. Dadurch kann beim Ausfall des Senders trotzdem eine Ablesung der Wärme-Verbrauchsdaten durchgeführt werden.

Es wird bevorzugt, dass der Sender innerhalb des ISM-Bandes betrieben werden kann. Durch den Betrieb innerhalb dieser lizenzfreien Frequenz können kostengünstige Vorrichtungen realisiert werden. Auch eine Kompatibilität zwischen unterschiedlichen Herstellern, die dieses Band verwenden, kann ermöglicht werden.

Gemäß einer weiteren Ausführungsform der Erfindung umfasst die Vorrichtung eine Schnittstelle für ein Schreib- und Lesegerät zum Schreiben oder Lesen einer Chipkarte, wobei die Schnittstelle mit der Verarbeitungseinrichtung verbunden ist. Durch den Einsatz einer solchen Schnittstelle können die Wärme-Verbrauchsdaten lokal auf eine Chipkarte gespeichert werden. Der Verbraucher kann diese beispielsweise per Post an das Dienstleistungsunternehmen senden und kein Ablesepersonal muss vor Ort anwesend sein.

Es wird bevorzugt, dass die Verarbeitungseinrichtung eine Selbstdiagnoseeinheit umfasst, um Fehlfunktionen zu identifizieren und zu melden. Falls die Vorrichtung Fehlfunktionen oder Ausfälle identifiziert, kann eine automatisch generierte Nachricht an das Dienstleistungsunternehmen versendet werden und ein Techniker kann gezielt zur Reparatur ausrücken.

Gemäß einer weiteren Ausführungsform der Erfindung umfasst die Verarbeitungseinrichtung eine Verschlüsselungseinheit, um eine Verschlüsselung der gespeicherten Wärme-Verbrauchsdaten durchzuführen. Durch die Verschlüsselung kann zum Beispiel der Missbrauch der Daten durch Dritten vermieden werden. Ergänzend können die Daten im Übertragungskanal verschlüsselt übertragen werden, um somit eine zusätzlichen Sicherheitsaspekt zu erreichen.

Es wird bevorzugt, dass das Einwahlprotokoll vorrichtungsspezifische Daten mit Hilfe des Senders weiterleitet. Somit kann der Mobilfunkbetreiber eine Abrechnung der Verbindung vornehmen.

Es wird bevorzugt, dass das Einwahlprotokoll einen Einwahlzeitpunkt in das GSM-Mobilfunknetzwerk definiert. Infolgedessen können die Einwahlzeitpunkte bevorzugt nachts gewählt werden, da zu dieser Zeit im Wesentlichen ein schwacher Datenverkehr innerhalb des Mobilfunknetzwerkes registriert wird.

Die vorstehend dargelegten und weiteren Merkmale der vorliegenden Erfindung werden in der nachstehenden detaillierten Beschreibung der Figuren in denen:
Fig. 1 eine schematische Darstellung einer ersten Ausführungsform der Vorrichtung zeigt, die einen Empfänger umfasst;
Fig. 2 ein Datenpaket darstellt, welches die Wärme-Verbrauchsdaten und weitere Information enthält;
Fig. 3 ein Blockdiagramm einer zweiten Ausführungsform der Vorrichtung zeigt, die eine Erfassungseinheit umfasst.

Die Erfindung wird im Folgenden im Zusammenhang mit den vorstehend beschriebenen Ausführungsformen konkretisiert. Es ist jedoch zu verstehen, dass die Erfindung nicht auf diese Ausführungsformen beschränkt sein soll.

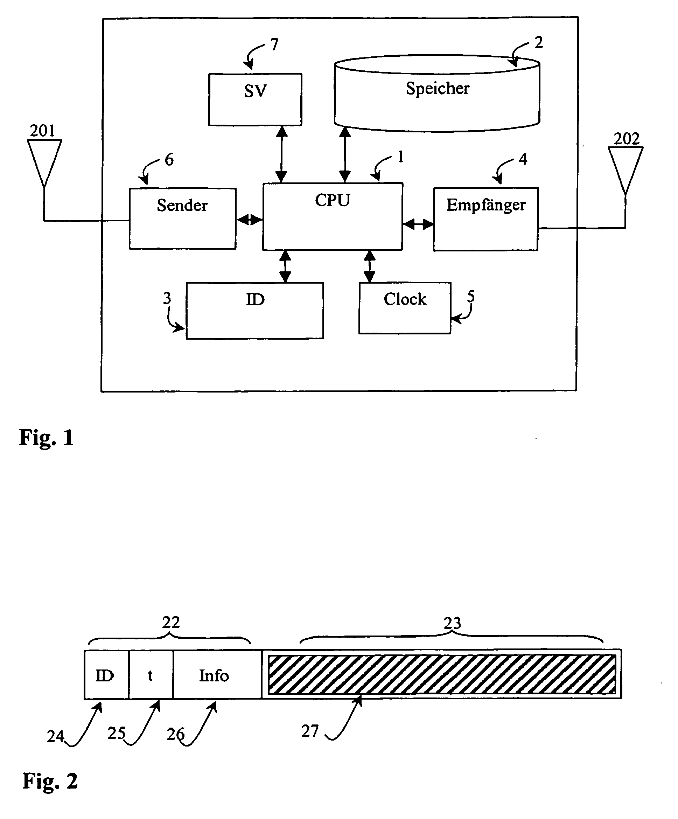

Fig. 1 repräsentiert ein Blockdiagramm einer ersten Ausführungsform der erfindungsgemäßen Vorrichtung, die als Datensammler in einem Netz verwendbar ist. Es wird dargestellt eine zentrale Verarbeitungseinrichtung 1 der Vorrichtung. Diese wird verwendet, um alle möglichen Operationen zu steuern. Innerhalb der Verarbeitungseinrichtung wird ein Softwareprogramm installiert und ausgeführt, welches alle in der Vorrichtung eingeschlossenen Einheiten steuert.

Die Verarbeitungseinrichtung 1 ist verbunden mit einem Speicher 2, in dem alle wichtigen Daten, wie Wärme-Verbrauchsdaten gespeichert werden. Intern verfügt die Verarbeitungseinrichtung über einen Zusatzspeicher, der zur Zwischenspeicherung oder andere betriebsinterne Operationen dient. Es ist bevorzugt, dass der Speicher 2 mit einem Erweiterungsspeicher ausgestattet wird, so dass eine Vergrößerung der Speicherkapazität erreicht werden kann. Der Speicher 2 wird als nichtflüchtiger Speicher realisiert, um zu vermeiden, dass bei Verlust der Spannungsversorgung wichtige Daten verloren gehen. Auch bevorzugt ist die Verwendung eines so genannten Backup-Speichers, der die Daten des Speichers 2 vollständig spiegelt und im Fehlerfall wiederherstellen kann. Alle Speicherzugriffe, Lese- oder Schreibeoperationen werden mit Hilfe der Verarbeitungseinrichtung 1 durchgeführt.

Um eine genaue Identifizierung der Vorrichtung zu ermöglichen, wird die Vorrichtung mit einem Identifizierungsmodul 3 erweitert, das ebenfalls mit der zentralen Verarbeitungseinrichtung 1 verbunden ist. Das Modul 3 stellt einen eindeutigen Identifizierungscode bereit, der es möglich macht, die Vorrichtung unter einer Vielzahl von Vorrichtungen zu identifizieren. Das Identifizierungsmodul 3 kann ein SIM-Modul beinhalten zum Betrieb in einer GSM-Infrastruktur. Das SIM-Modul umfasst eine Chipkarte, die jede Vorrichtung genau identifiziert. Diese Chipkarte ist portabel und kann von einem Gerät zum nächsten übertragen werden. Die Chipkarte erlaubt das Einwählen in ein lokal verfügbares Funknetzwerk und kann aber auch als Speichermedium dienen, um verschiedene Verbraucherinformationen zu speichern. Die vorhandene Infrastruktur des Netzbetreibers kann somit in Anspruch genommen werden.

Ferner wird ein Sender 6 der Vorrichtung dargestellt. Der Sender 6 ist verbunden mit der Verarbeitungseinrichtung 1 und kann somit indirekt auf den Speicher 2 zugreifen. Die gespeicherten Wärme-Verbrauchsdaten können hierdurch ausgelesen und per Funk weitergeleitet werden, z.B. an das Dienstleistungsunternehmen. Der Sender kann in einem GSM-Modul vorgesehen sein, um somit eine bidirektionale Kommunikation zwischen der Vorrichtung und einem bestimmten Einwahlknoten bzw. einer Basisstation zu ermöglichen. Das GSM-Modul erlaubt die Verwendung von verschiedenen Mobilfunkdienste wie GPRS oder falls gewünscht WAP. Da die Vorrichtung über ein SIM-Modul und ein GSM-Modul verfügt, kann ferner eine gezielte Anwahl der Vorrichtung durch ein Dienstleistungsunternehmen durchgeführt werden. Demgemäß kann das Dienstleistungsunternehmen gezielt auf die Vorrichtung zugreifen und, falls gewünscht, die Wärme-Verbrauchsdaten aus dem Speicher zu jedem beliebigen Zeitpunkt ablesen. Diese Schritte können softwaretechnisch automatisiert werden, so dass Kosten für Verwaltung bzw. Ablesepersonal eingespart werden können.

Ferner ist ein mit der Verarbeitungseinrichtung 1 verbundenes Zeitsteuerungsmodul 5 vorgesehen. Die Verarbeitungseinrichtung verwendet Informationen des Zeitsteuerungsmoduls 5, um beispielsweise getaktete Operationen durchzuführen oder um den Sender 6 zu steuern. Da der Sender nur für bestimmte Zeitfenster in Betrieb genommen werden muss, wird ein wirtschaftlich vorteilhafter Umgang mit Energie zur Speisung der Vorrichtung erreicht. Eine Antenne 201 ist vorgesehen, die von der Sendeeinheit 6 verwendet wird, um die gesamte Funkkommunikation durchzuführen. Analog wird eine zweite Antenne 202 durch den Empfänger 4 benutzt. Es ist bevorzugt, technisch beide Antennen 201 und 202 zusammenzufassen, um einen bidirektionalen Datenverkehr über eine gemeinsame Einheit zu realisieren. Der Empfänger empfängt mit Hilfe der Antenne 202 die Wärme-Verbrauchsdaten, die von einer Vielzahl von Heizkostenverteilern stammen und reicht diese an die Verarbeitungseinrichtung weiter. Die Verarbeitungseinrichtung 1 kann diese Daten weiter verarbeiten und gibt sie anschließend an das Speichermodul weiter, wo sie gespeichert werden. Auch der Empfänger 4 kann zeitgesteuert von der Verarbeitungseinrichtung ein bzw. ausgeschaltet werden. Vorteilhafterweise kann der Empfang der Daten zu bestimmten Zeitpunkten durchgeführt werden, wo ein schwacher Datenverkehr herrscht. Demgemäß wird Energie gespart, da der Empfang nur für relativ kurze Zeitabständen eingeschaltet werden muss. Die Einheit 7 stellt die Stromversorgung der Vorrichtung dar. Durch die erfindungsgemäße Steuerung der einzelnen Einheiten durch die zentrale Verarbeitungseinrichtung 1 kann eine mindestens 10-jährige Betriebsdauer erreicht werden. Die Stromversorgung wird durch handelsübliche Batterien oder Akkus realisiert, um einen wirtschaftlich vorteilhaften Aspekt zu gewährleisten.

Fig. 2 zeigt das Modell eines Datenpaketes dar, der Wärmeverbrauchsdaten enthält. Das Datenpaket weist zwei Abschnitte auf, nämlich einen Datenkopf 22 und einen Nutzdatenbereich 23. Der Datenkopf enthält in dieser nicht beschränkenden Ausführungsform drei Bereiche, nämlich einen Identifizierungsbereich 24, einen Zeitstempel 25 und ein Informationsfeld 26.

Der Nutzdatenbereich 23 oder das Nutzdatenfeld enthält die Wärme-Verbrauchsdaten, die von der Vorrichtung gespeichert werden. Sie werden im Speicher 2 abgelegt und können, falls gewünscht, weiterverarbeitet werden. Die Daten werden bevorzugt mit Hilfe einer Verschlüsselungseinheit verschlüsselt, so dass Unbefugte keinen Datenmissbrauch betreiben können. Die Länge der Daten kann variabel gestaltet werden, demzufolge wird eine uneingeschränkte Nutzung des Nutzdatenbereiches erreicht. Die Länge der Nutzdaten kann beispielsweise im Informationsfeld 26 mitgeteilt werden. Der Identifizierungsbereich 24 kann den Identifizierungscode enthalten, der zum Beispiel im SIM-Modul mit enthalten ist. Der Zeitstempel 25 erhält zeitliche Angaben wie Datum und Uhrzeit. Die Information aus dem Feld 25 kann beispielshalber für statistische Zwecke verwendet werden, auch ist eine zeitliche Sortierung und Zuordnung der Datenpakete möglich. Neben der Länge an Nutzdaten kann das Informationsfeld 26 ebenfalls liegenschaftsspezifische Informationen enthalten. Bevorzugt sind Daten wie Größe der beheizten Räume, Adresse der Liegenschaft oder zusätzliche Informationen betreffend das Dienstleistungsunternehmen. Außerdem muss jedes Datenpaket einer bestimmten Wärmequelle zugeordnet werden. Dies kann durch zusätzliche Angaben im Informationsfeld oder aber durch die Identifizierung mit Hilfe des Identifikationscodes aus Feld 24 geschehen.

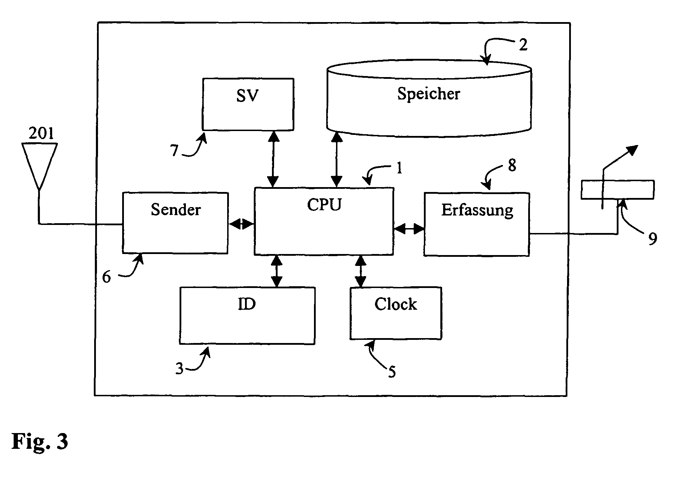

Fig. 3 schlägt eine weitere Ausführungsform der vorliegenden Erfindung vor, welche als Heizkostenverteiler in einem Netz verwendbar ist. Diese Ausführungsform ist teilweise analog zu der Ausführungsform, welche anhand von Fig. 1 beschrieben wurde. Anstelle eines Empfängers 4 (Fig. 1) wird ein Erfassungsmodul 8 eingesetzt und die Antenne 202 wird durch einen Temperatursensor 9 ersetzt. Die so veränderte Vorrichtung kann konkret als Wärme-Verbrauchszähler (Heizkostenverteiler) eingesetzt werden. Der Sensor 9 erfasst den Wärmeverbrauch und sein Ausgangssignal kann direkt zur Ermittlung der Wärmekosten benutzt werden. Die anhand von Fig. 1 beschriebe Funktionalität der Vorrichtung kann weiterhin bestehen bleiben. Infolgedessen kann jede Heizung (Wärmequelle) in einer Liegenschaft mit einer erfindungsgemäßen Vorrichtung bestückt werden, um somit eine gezielte Femablesung bzw. Fernübertragung der Wärme-Verbrauchsdaten zu ermöglichen. Im übrigen gelten alle in Verbindung mit Fig. 1 beschriebenen Merkmale auch sinngemäß für die in Fig. 3 beschriebene Ausführungsform.

Mit Hilfe der Verarbeitungseinrichtung kann eine periodische Übertragung der Wärme-Verbrauchsdaten realisiert werden. Falls ein Fehler in der Vorrichtung mit Hilfe der darin enthaltenen Selbstdiagnoseeinheit festgestellt wurde, kann das Dienstleistungsunternehmen automatisch benachrichtigt werden.

Ferner können Wärme-Verbrauchsdaten kontinuierlich ausgelesen werden, um den genauen Betrieb der Wärmequelle zu überwachen. Es ist auch bevorzugt, die erfindungsgemäße Vorrichtung mit einem Ventil, der die Wärmeabgabe an die Wärmequelle steuert, zu verbinden, um so zusätzlich eine Fernsteuerung der Raumtemperatur zu erreichen.

Bevorzugt sind alle Einrichtungen bzw. Komponenten der Vorrichtung in einem Gehäuse untergebracht bzw. darin integriert. Dies schafft einen kompakten und Raum sparenden Aufbau.

Der mit einem Weitverkehrsnetzmodul (z.B. GSM oder UMTS) verbundene Sendeempfänger kann bevorzugt in einem sogenannten "Horchmodus" betrieben werden. Dabei ist der Sendeempfänger auf Empfang eines Steuersignals eingerichtet, das geeignet ist, die Übertragung der Verbrauchsdaten zu steuern. In einer ersten Ausführung wird bei Empfang des Steuersignals unmittelbar die Aussendung gespeicherter Verbrauchsdaten über den Sendeempfänger ausgelöst. In einer zweiten Ausführung enthält das Steuersignal einen Instruktionsabschnitt, der eine Zeitangabe bzw. ein Zeitprotokoll für die Aussendung der Verbrauchsdaten aufweist. Dadurch läßt sich die Vorrichtung von außen steuern.

Bevorzugt ist ein Programmspeicher vorgesehen, der Programmcodes zur Steuerung der Verarbeitungseinrichtung oder/oder des Zeitsteuermoduls und/oder des Weitverkehrsnetzmoduls (GSM oder dergleichen) enthält. Das Weitverkehrsnetzmodul (GSM, UMTS oder dergleichen) enthält eine Schnittstelle, die mit dem Programmspeicher verbunden ist, um über den Sendeempfänger Programmcodes zu empfangen, die im Programmspeicher abgelegt werden, um sodann die Vorrichtung zu steuern. Dies entspricht einem Software-Download.

Ebenfalls kann das Sendeprotokoll bzw. Empfangsprotoll bzw. Einwahlprotokoll über die Schnittstelle aktualisiert werden. Dazu wird ein aktualisiertes Protokoll heruntergeladen und gespeichert. Alternativ kann der Sendeempänger ein aktuelles Protokoll aufgrund einer in der Programmsteuerung enthaltenen Instruktion zu einem vorbestimmten Zeitpunkt anfordern, empfangen und in den Speicher laden.

Alternativ zu der oben genannten Stromversorgung durch Batterien oder Akkus kann im besonderen Anwendungsfall die Vorrichtung durch einen Anschluß an das öffentliche Stromnetz versorgt werden. Bevorzugt ist dann ein Transformator und Gleichrichter in der Vorrichtung vorgesehen, um eine Gleichspannung bereitzustellen.

Die Verarbeitungseinrichtung umfasst bevorzugt ein Komprimierungsmodul, das ausgelegt ist, um in dem Speicher gespeicherte Wärme-Verbrauchsdaten verlustfrei zu komprimieren und in komprimierter Form an den Sender weiterzuleiten.

Das Komprimierungsmodul erzeugt bevorzugt betriebssystemunabhängige und dateisystemunabhängige Daten.

Der Sender enthält bevorzugt ein UMTS-Modul, das die Wärme-Verbrauchsdaten über ein UMTS-Mobilfunknetzwerk weiterleitet.

Der Sender umfasst bevorzugt ein TETRA-Modul, das die Wärme-Verbrauchsdaten über ein TETRA-Mobilfunknetzwerk weiterleitet.

Der Sender umfasst bevorzugt ein Internet-Modul, das mit einem Web-Anschluss verbindbar ist, um die Wärme-Verbrauchsdaten über das Internet weiterzuleiten.

Eine Stromversorgung 7 ist vorgesehen, die mit der Verarbeitungseinrichtung verbunden ist, wobei die Stromversorgung Batterien bzw. Akkus aufweist.

Das Identifizierungsmodul umfasst bevorzugt ein SIM-Modul.

Die Verarbeitungseinrichtung ist bevorzugt ausgelegt, einen Transfer der Wärme-Verbrauchsdaten mittels TCP/IP durchzuführen.

Der Transfer der Wärme-Verbrauchsdaten wird bevorzugt mittels eines GPRS-Dienstes durchgeführt.

Die Verarbeitungseinrichtung ist bevorzugt ausgelegt, die gespeicherten Wärme-Verbrauchsdaten mit dem Identifizierungscode zu ergänzen und anschließend in Form von elektronischer Post über den Sender weiterzuleiten.

Es ist bevorzugt eine mit der Verarbeitungseinrichtung verbundene Schnittstelle vorgesehen, welche angepasst ist, die gespeicherten Wärme-Verbrauchsdaten lokal an eine Ableseeinrichtung weiterzugeben.

Der Sender kann bevorzugt innerhalb des ISM-Bandes betrieben werden.

Es ist bevorzugt eine Schnittstelle für ein Schreib- und Lesegerät zum Beschreiben oder Lesen einer Chipkarte vorgesehen, wobei die Schnittstelle mit der Verarbeitungseinrichtung verbunden ist.

Die Vorrichtung umfasst bevorzugt eine Befestigungsvorrichtung, um an einer Wärmequelle befestigt zu werden.

Die Verarbeitungseinrichtung umfasst bevorzugt eine Selbstdiagnoseeinheit, um Fehlfunktionen zu identifizieren und zu melden.

Die Verarbeitungseinrichtung umfasst bevorzugt eine Verschlüsselungseinheit, um eine Verschlüsselung der gespeicherten Wärme-Verbrauchsdaten durchzuführen.

Das Einwahlprotokoll leitet bevorzugt vorrichtungsspezifische Daten mit Hilfe des Senders weiter.

Das Einwahlprotokoll definiert bevorzugt einen Einwahlzeitpunkt in das GSM-Mobilfunknetzwerk.

## Patentansprüche

1. Vorrichtung zum Erfassen und Weiterleiten von Wärme-Verbrauchsdaten, umfassend:
- eine Verarbeitungseinrichtung (1) zur Verwaltung der Wärme-Verbrauchsdaten und zur Steuerung der Vorrichtung;
- ein Identifizierungsmodul (3), das einen Identifikationscode für die Identifizierung der Vorrichtung bereitstellt;
- einen Sender (6), der die Wärme-Verbrauchsdaten weiterleitet;
- ein Zeitsteuerungsmodul (5), das mit der Verarbeitungseinrichtung gekoppelt ist, zum Steuern des Senders;
- ein Erfassungsmodul (8) zum Erfassen der Wärme-Verbrauchsdaten, wobei das Erfassungsmodul mit der Verarbeitungseinrichtung (1) verbunden und dazu bestimmt ist, in der Nähe einer Wärmequelle angeordnet zu werden,
**dadurch gekennzeichnet, dass**
- der Sender jeweils in einem vorbestimmten Sendezeitfenster gemäß einem Sendeprotokoll zum Senden des Wärme-Verbrauchswertes einschaltbar ist, und
- das Erfassungsmodul von der Verarbeitungseinrichtung jeweils in einem vorbestimmten Erfassungszeitfenster gemäß einem Erfassungsprotokoll zum Erfassen des Wärme-Verbrauchswertes einschaltbar ist,
- wobei das Sendeprotokoll und das Erfassungsprotokoll so angepasst sind, dass das Sendezeitfenster und das Erfassungszeitfenster im Wesentlichen zeitlich hinsichtlich der Zeitdauer übereinstimmen.

2. Vorrichtung nach Anspruch 1, wobei der Sender ein Weitverkehrsnetzmodul umfasst, welches die Wärme-Verbrauchsdaten über ein Weitverkehrsfunknetzwerk weiterleitet, wobei das Weitverkehrsnetzmodul das Identifizierungsmodul (3) enthält.

3. Vorrichtung nach Anspruch 2, wobei die Verarbeitungseinrichtung (1) bzw. das Zeitsteuermodul (5) das Weitverkehrsnetzmodul mittels eines Einwahlprotokolls steuert.

4. Vorrichtung nach einem der vorhergehenden Ansprüche, **dadurch gekennzeichnet, dass** das Erfassungsmodul einen Temperatursensor aufweist.

5. Vorrichtung nach einem der vorhergehenden Ansprüche, wobei die Verarbeitungseinrichtung ausgelegt ist, die Wärme-Verbrauchsdaten mit einem Datenkopf zu versehen, der den Identifizierungscode, Uhrzeit und weitere Information enthält, die die Wärme-Verbrauchsdaten betreffen.

6. Vorrichtung nach einem der vorhergehenden Ansprüche, weiter umfassend
- einen Speicher (2) zum Speichern der Wärmeverbrauchsdaten.

7. Vorrichtung nach einem der vorhergehenden Ansprüche, weiter umfassend
- ein Diagnosemodul zum Erkennen von Fehlfunktionen der Vorrichtung, wobei das Diagnosemodul angepasst ist, über den Sender eine Fehlermeldung zu senden, falls eine Fehlfunktion erkannt wird.

8. Vorrichtung nach einem der vorhergehenden Ansprüche, weiter umfassend
- ein Komprimierungsmodul zum Komprimieren der Wärmeverbrauchsdaten.

9. Vorrichtung nach einem der vorhergehenden Ansprüche, wobei der Sender angepasst ist, die Wärmeverbrauchsdaten gemäß dem TCP/IP-Protokoll zu versenden.

10. Vorrichtung nach einem der vorhergehenden Ansprüche, weiter umfassend
- ein Verschlüsselungsmodul zur Verschlüsselung der Wärmeverbrauchsdaten vor dem Senden.

## Claims

1. Device for detecting and forwarding heat consumption data, comprising:
- a processing apparatus (1) for managing said heat consumption data and for controlling the device;
- an identification module (3) providing an identification code for identifying the device;
- a transmitter (6) forwarding said heat consumption data;
- a timing module (5) coupled to said processing apparatus, for controlling said transmitter;
- a detection module (8) for detecting said heat consumption data, wherein said detection module is connected to said processing apparatus (1) and intended to be arranged in the vicinity of a heat source;
**characterized in that**
- the transmitter is capable of being switched on within a predetermined transmission time frame according to a transmission protocol for transmitting the heat consumption value; and
- the detection module is capable of being switched on by the processing apparatus within a respective predetermined detection time frame in accordance with a detection protocol for detecting the heat consumption value;
- wherein the transmission protocol and the detection protocol are arranged such that the transmission time frame and the detection time frame substantially match with respect to the time period.

2. Device according to claim 1, wherein the transmitter comprises a wide area network module forwarding said heat consumption data via a wide area radio network, wherein said wide area network module includes said identification module (3).

3. Device according to claim 2, wherein the processing apparatus (1) or the timing module (5) controls the wide area network module with a dial-in protocol.

4. Device according to one of the preceding claims, **characterized in that** the detection module has a temperature sensor.

5. Device according to one of the preceding claims, wherein the processing apparatus is designed to provide the heat consumption values with a header including said identification code, the time of day and additional information related to said heat consumption data.

6. Device according to one of the preceding claims, further comprising:
- a storage (2) for storing said heat consumption data.

7. Device according to one of the preceding claims, further comprising:
- a diagnosis module for recognition of malfunctions of the device, wherein said diagnosis module is adapted to transmit a malfunction message via said transmitter in case a malfunction is recognized.

8. Device according to one of the preceding claims, further comprising:
a compression module for compressing the heat consumption data.

9. Device according to one of the preceding claims, wherein said transmitter is adapted to transmit said heat consumption data in accordance with the TCP/IP-protocol.

10. Device according to one of the preceding claims, further comprising:
an encryption module for encrypting said heat consumption data prior to transmission.

## Revendications

1. Dispositif de détection et transmission de données de consommation de chauffage, comprenant :
- un dispositif de traitement (1) pour administrer les données de consommation de chauffage et pour commander le dispositif ;
- un module d'identification (3), qui fournit un code d'identification pour l'identification du dispositif ;
- un émetteur (6), qui transmet les données de consommation de chauffage ;
- un module de commande temporelle (5), qui est couplé au dispositif de traitement, pour commander l'émetteur ;
- un module de détection (8) pour détecter les données de consommation de chauffage, dans lequel le module de détection est relié au dispositif de traitement (1) et est défini afin d'être disposé à proximité d'une source de chaleur,
**caractérisé en ce que**
- l'émetteur peut respectivement être enclenché dans une fenêtre temporelle d'émission prédéterminée sleon un protocole d'émission pour émettre les données de consommation de chauffage, et
- le module de détection peut être enclenché par le dispositif de traitement respectivement dans une fenêtre temporelle de détection prédéterminée sleon un protocole de détection pour détecter la valeur de consommation de chauffage,
- dans lequel le protocole d'émission et le protocole de détection sont adaptés de telle sorte que la fenêtre temporelle d'émission et la fenêtre temporelle de détection concordent essentiellement temporellement en ce qui concerne la durée.

2. Dispositif sleon la revendication 1, dans lequel l'émetteur comprend un module de réseau longue distance, qui transmet les données de consommation de chauffage par l'intermédiaire d'un réseau radio longue distance, dans lequel le module de réseau longue distance contient le module d'identification (3).

3. Dispositif selon la revendication 2, dans lequel le dispositif de traitement (1), respectivement le module de commande temporelle (5) commande le module de réseau longue distance au moyen d'un protocole de connexion.

4. Dispositif selon une des revendications précédentes, **caractérisé en ce que** le module de détection présente un capteur de température.

5. Dispositif selon une des revendications précédentes, dans lequel le dispositif de traitement est conçu afin de pourvoir les données de consommation de chauffage d'une tête de données, qui contient le code d'identification, l'heure et d'autres informations, qui concernent les données de consommation de chauffage.

6. Dispositif sleon une des revendications précédentes, comprenant en outre :
- une mémoire (2) pour mémoriser les données de consommation de chauffage.

7. Dispositif selon une des revendications précédentes, comprenant en outre :
- un module de diagnostic pour reconnaître les fonctions défaillantes du dispositif, dans lequel le module de diagnostic est adapté afin d'envoyer un message d'erreur par l'intermédiaire de l'émetteur, au cas où une fonction défaillante est reconnue.

8. Dispositif sleon une des revendications précédentes, comprenant en outre :
- un module de compression pour compresser les données de consommation de chauffage.

9. Dispositif sleon une des revendications précédentes, dans lequel l'émetteur est adapté afin d'envoyer les données de consommation de chauffage selon le protocole TCP/IP.

10. Dispositif selon une des revendications précédentes, comprenant en outre :
- un module de cryptage pour crypter les données de consommation de chauffage avant l'émission.
